# EUROPEAN PATENT SPECIFICATION

(11) **EP 2 353 929 B1**
(45) Date of publication and mention of the grant of the patent: **13.07.2016**
(21) Application number: 10152075.7
(22) Date of filing: 29.01.2010
(51) Int. Cl.: B60N 2/22, B60N 2/38, B60N 2/50

(54) **A seat assembly for an industrial vehicle comprising a tiltable backrest**
Sitzanordnung für Industriefahrzeug mit einer kippbaren Rückenlehne
Ensemble de siège pour véhicule industriel comprenant un dossier inclinable

(43) Date of publication of application: 10.08.2011
(73) Proprietor: UniCarriers Europe AB, 435 82 Mölnlycke (SE)
(72) Inventor: Anderberg, Henrik, 413 20, GÖTEBORG (SE); Nielsen, Torben, SE-511 92 Örby (SE)
(74) Representative: Awapatent AB

(56) References cited:
- WO-A1-2008/057036
- DE-U1- 9 405 053
- US-A1- 2005 206 209
- US-B1- 6 709 058

## Description

### Technical field of the invention

The present invention relates to a seat assembly comprising a backrest tiltable between at least two positions.

### Background

Industrial vehicles are used for handling materials in, for example, warehouses and stockyards. For driving the vehicle and controlling the cargo, the vehicle is typically provided with an open or closed driver's cab provided with a number of control elements such as a steering wheel, various switches, levers and foot pedals, along with a driver's seat. To increase the comfort of the driver, the driver's seat may be suspensed to allow a vertical movement of the seat to absorb shocks. To provide an equal comfort for drivers of various weights, the firmness of the suspension may preferably be adjustable. An example of a vehicle seat with adjustable suspension is known from US 4,687,250.

Typically, material handling includes, not only transporting, but also lifting the material. As the material is lifted to high heights, the driver must lean his head back to maintain visual contact with the material. This may be uncomfortable for the driver and results in an ergonomically unfavourable working position.

In an attempt to overcome this problem, EP 0 543 791 discloses a seat assembly with a backrest adjustable between a normal vehicle driving position and a rearwardly tilted position for handling loads at high heights. Although, this arrangement may alleviate the above-discussed problem, some drivers may still experience ergonomical problems, particularly when the industrial truck is utilized by various drivers of different weight and size. For example, light weight drivers may have to strain their body to move the backrest to the rearwardly tilted position, whereas heavy weight drivers may experience that the backrest is tilted rearwardly unintentionally. Document DE9405053U discloses a seat assembly according to the preamble of claim 1.

Accordingly, there still remains a need for an ergonomic seat assembly that may be used by drivers of various sizes and weights.

### Summary of the invention

It is therefore an object of the present invention to provide an alternative seat assembly, which overcomes or at least alleviates the above-discussed problems of the prior art.

This object is achieved by means of the invention as defined in the appended claims.

An advantage with such an adjustable tilt resistance is that the seat is easy to adapt and optimize for various users, thereby making the seat assembly equally ergonomically favourable for drivers of all weights.

Preferably, the seat section is also suspended to allow a vertical movement of said seat section. Further, the seat assembly may preferably further comprise a suspension adjustment for adjusting a firmness of said suspension, and a control means operable by the driver to simultaneously adjust the suspension adjustment and the tilt resistance adjustment.

The control means may, for example, be a control handle or a control knob. Other control means are also feasible, such as a lever arm, wheel, pedal or the like. The control means may also be electric or electronic contol means, useable to activate an electric motor or the like.

The present inventors have realized that a backrest with an adjustable tilt resistance enables an ergonomically favorable seating position for drivers of various weights in any of the at least two tilt positions. The inventor has further realized that, as both the firmness of the suspension and the tilt resistance of the backrest may advantageously be based on the driver's weight, the firmness of the suspension and the tilt resistance of the backrest can be simultaneously adjusted by the same control means. As the firmness of the suspension and the tilt resistance may be set by a single adjustment operation, the driver may quickly and easily adjust the seat to fit his size and weight.

Furthermore, the above-discussed arrangement makes it easy and intuitive to adjust the seat to fit the driver's size and weight, which also ensures that the driver takes the time to adjust the seat for optimal ergonomics. An easy and quick seat adjusment is also important to utilize the time of the driver and the truck efficiently. Thus, the present seat arrangement not only makes the working environment for the driver more comfortable and ergonomically favourable, but also leads to a more efficient and cost-effective use of the driver and the truck.

According to the invention, the backrest is pivotally mounted to a rearward area of the seat section.

Furthermore, the seat section may be arranged to remain in an essentially unaffected tilt position as the backrest is tilted between said at least two positions, thereby allowing the driver's feet to maintain contact with the vehicle floor and/or any foot pedals as the backrest is tilted rearwards.

According to the invention, the backrest is arranged to tilt about a rotation axis which is displaced from a pivotal mount between the seat section and the backrest.

According to the invention, the seat section is arranged to move forwards as the backrest is tilted rearwards. This may facilitate for the driver to tilt the backrest and is typically ergonomically favorable. A further ergonomic advantage is obtained since the distance between the user's hand and the controls for operating the truck is essentially unaffected by the tilting of the backrest. Still further, the forward movement of the seat section makes it possible to reduce the distance which the backrest is tilted backwards, which is important when the available space in the seating compartment is limited.

The tilt resistance preferably comprises a first set of springs arranged to generate the tilt resistance. The first set of springs may comprise at least one gas spring. By means of the gas spring, the tilting motion becomes dampened.

Further, the tilt resistance preferably also comprises a second set of springs arranged to exert a force that reduces the tilt resistance generated by the first set of springs, wherein the magnitude of the force exerted by the second set of springs is adjustable by the control means, thereby providing the tilt resistance adjustment for adjusting a tilt resistance of the backrest.

The second set of springs may comprise at least one coil spring. An advantage with using a coil spring is that it may be provided at a low cost. Furthermore, the force exerted by the coil spring may be controlled by changing the distance between a first attachment point where the first end of the coil is attached and a second attachment point where the second end of the coil is attached (i.e. the force exerted by the coil spring may be increased by stretching the coil spring).

The tilt resistance adjustment may further comprise an anchor provided with threads and connected to the at least one coil spring, and a threaded member rotatably interconnected with the threads of said anchor, and arranged in such a way that axial rotation of the threaded member in a first direction stretches the at least one coil spring in the second set of springs thereby increasing the magnitude of the force exerted by the second set of springs and axial rotation of said threaded member in a second opposite direction relaxes the at least one coil spring in the second set of springs thereby decreasing the magnitude of the force exerted by the second set of springs, wherein rotation of the threaded member is controlled by the control means.

The second set of springs may comprise a first and a second coil spring arranged symmetrically about the threaded member to provide a well-balanced tilt resistance adjustment.

The control means may further comprise an indicator for indicating when the firmness of the suspension and the tilt resistance is appropriate for the driver's weight.

The seat assembly may preferably be comprised in an industrial vehicle, such as an industrial truck.

These and other aspects of the invention will be apparent from and elucidated with reference to the embodiments described hereinafter.

### Brief description of the drawings

For exemplifying purposes, the invention will be described in closer detail in the following with reference to embodiments thereof illustrated in the attached drawings, wherein:
Fig. 1 illustrates an overview of an exemplifying industrial vehicle in accordance with an embodiment of the present invention;
Figs. 2 schematically illustrates a perspective view from above of a part of a seat assembly according to an embodiment of the invention; and
Fig 3 illustrates the part of the seat assembly of Fig 2 in a cross-sectional side view.

### Detailed description of preferred embodiments

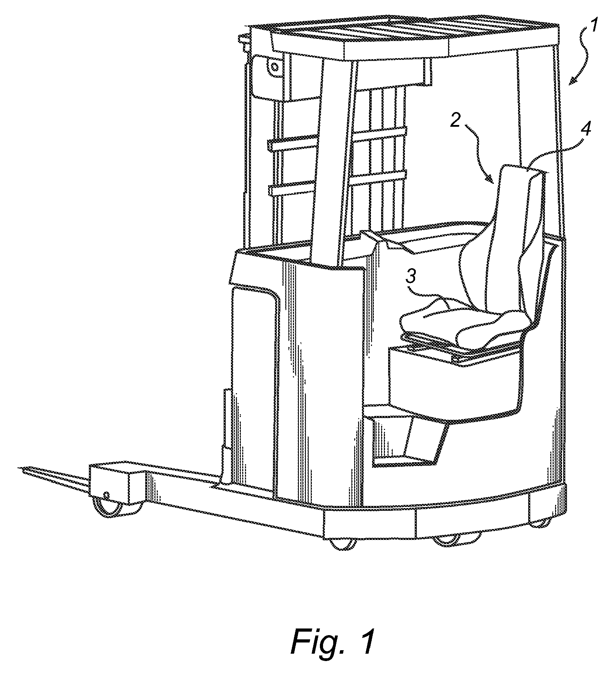

Fig. 1 illustrates an overview of an exemplifying industrial vehicle in accordance with a first embodiment of the present invention. The industrial vehicle 1, here a fork lift truck, is adapated such that a user operating the vehicle is seated transversely to a driving direction. However, other arrangements are also possible, such as seating the driver in the driving direction. For seating the driver, a seat assembly 2 is provided comprising a horizontal seat section 3 for supporting the seated driver's buttocks, and a vertical tiltable backrest 4.

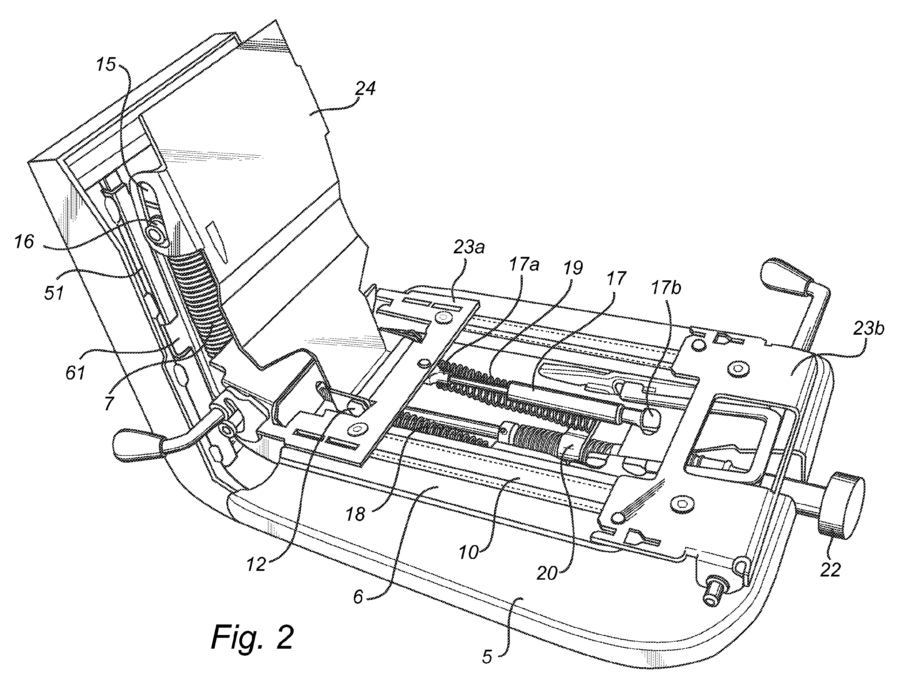

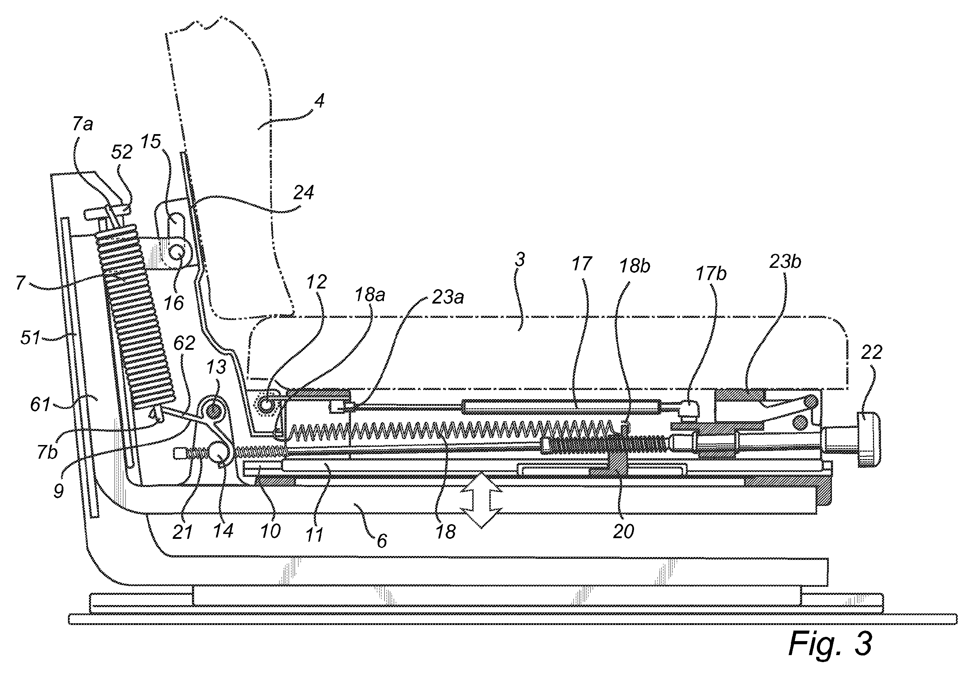

Figs. 2 and 3 schematically illustrates a part of the seat assembly according to an embodiment of the invention. A preferred embodiment of a seat assembly according to the invention will now be described with reference to Figs. 2 and 3.

The seat section 3 and the backrest 4 are here supported by a seat frame 5 which can be mounted to the floor of the vehicle cab. The seat section 3 typically includes a seat base 23a, 23b in metal, a cushion, and a cover e.g. in vinyl. Similarly, the backrest 4 typically includes a backrest base 24 in metal, a cushion, and a cover e.g. in vinyl.

To increase driver's comfort, the seat section may preferably be resiliently suspended. To this end, the seat section 3 is preferably supported by a seat carriage 6 mounted to the seat frame 5. To provide the resilient suspension, the seat carriage 6 is connected to the seat frame by means of a guide system 51, 61, arranged at the rearward end, and behind the seated user, and behind the backrest. The guide system is arranged so that the seat section 3 can move up and down to absorb shocks. A suspension is further arranged between the seat carriage 6 and the frame 5. The suspension is here achieved by a pair of coil springs 7 (of which only one is visible in the figures) having upper ends 7a attached to an upper rear 52 of the seat frame 5 and lower ends 7b connected to a connection 62 of the rear area of the seat carriage 6. To provide a suspension adjustment, the connection 62 may include a plate 9 tiltable about a rotation axis 13, which rotation axis is fixed in relation to the seat carriage 6. The opposite end of the tiltable plate 9 is attached to a member 14 with a threaded hole, which is arranged on a threaded shaft 21. The threaded shaft 21 is mounted to the seat carriage 6, in such a way that it is rotatable about its longitudinal axis, whereas the longitudinal position of the shaft is fixed relative the seat carriage 6. Furthermore, a control knob 22, operable by the driver, is rigidly secured at the front end of the threaded shaft 21. Manual rotation of threaded shaft 21 by means of the control knob 22 causes the tiltable plate 9 to tilt about its rotational axis 13 thereby relaxing or stretching the springs 7 to adjust spring tension and thus the firmness of the suspension.

However, other suspension arrangments are per se known in the art, and may also be used in conjunction with the tilt resistance adjustment of the present invention. An example of such a suspension arrangement is disclosed in US 4,687,250 which is hereby incorporated by reference.

The seat section 3 is preferably slidably mounted to the seat carriage 6. This may be achieved by providing a set of slide rails 11 attached at the underside of the seat base 23 of the seat section, and a corresponding set of guide rails 10 attached to the seat carriage 6, wherein the slide rails 11 and the guide rails10 are slidably engaged.

Further, the seat section 3 is preferably pivotally interconnected with the backrest 4 at a first axis. This can be achieved by interconnecting the seat base 23 and the backrest base 24 by means of a hinge 12 arranged near the rear end of the seat section.Thus, the seat section may be displaced in conjunction with tilting of the backrest.

The backrest is preferably tilted about a second axis which is displaced from the first axis, i.e. the pivotal connection between the seat section and the backrest. The backrest 4 is supported by the seat frame 5 in such a way that vertical and pivotal movement of the backrest 4 relative the seat frame 5 is allowed to allow the backrest to be tilted. The tilting ability of the backrest is preferably accomplished by means of a second pivotal axis, separated from the pivotal interconnection between the backrest and the seat section. This can preferably be achieved by slots 15 at either side of the backrest base 24, and arranging pins 16 fixedly attached to the seat carriage 6. The slots also enables the sliding movement of the seat section.

A first set of springs 17, here being a gas spring 17, is provided to generate a tilt resistance of the backrest. The gas spring is here arranged with its rearward end 17a attached to the seat base 23a of the seat section 3, and its front end 17b attached to the seat carriage 6. Through this arrangement, the gas spring 17 is compressed as the backrest is tilted rearwards, since the seat base 23 is moved forwards relative to the seat carriage 6, and stretched as the backrest is moved towards an upright position, since the seat base 23 is moved rearwards relative the seat carriage 6.

There is also provided a tilt resistance adjustment for adjusting the tilt resistance of the backrest. To this end, the tilt resistance may comprise a second set of springs, here being a pair of coil springs 18,19. The coil springs are arranged with their rearward ends 18a connected to the seat base 23a of the seat section 3, and their front ends 18b threadably connected to an anchor plate 20 arranged on the threaded shaft 21. The coil springs are preferably arranged symmetrically about the threaded shaft 21.

Manual rotation of threaded shaft 21 by means of the control knob 22 moves the anchor plate towards or away from the points where the rearward ends 18a of the coil springs are attached to the seat base 23 of the seat section 3 and thereby relaxes or stretches the springs 18,19 to adjust spring tension. The coil springs 18,19 will exert a force that pulls the seat section forwardly, thereby reducing the tilt resistance generated by the gas spring 17. The gas spring 17 and the coil springs 18,19 are preferably combined such that the tilt resistance is adequate for a heavy weight driver as the anchor plate 20 is near the end position that provides minimum tension of the springs 18,19, and adequate for a light weight driver as the anchor plate 20 is near the end position that provides maximum tension of the springs 18,19 . Consequently, an adequate tilt resistance can be achieved also for drivers of various intermediate weights by moving the anchor plate 20 to an appropriate intermediate position by turning the control knob 22.

Since the suspension adjustment and the tilt resistance adjustment utilize the same threaded shaft 21, the firmness of the suspension of the seat and the tilt resistance of the backrest may be simultaneously adjusted by rotation of the control knob 22.

The pitch of the threading of the threaded shaft 21 may be uniform over its entire length, and specifically at both the part of the threading connected to the member 14 and at the part connected to the anchor plate 20. However, the threaded shaft may also be provided with different threaded sections connected with the member 14 and the anchor plate 20, respectively. These sections may e.g. have different pitch, different cross-sectional dimensions, etc.

Even though the same control knob 22 and the same threaded shaft 21 have been discussed according to a preferred embodiment as being operable to adjust both the suspension and the tilt resistance, it is also possible to control the suspension and the tilt resistance separately, by means of different control means. Further, it is also possible to use a single control means, but simultaneously providing rotation to two different threaded shafts, or the like. For example, the control means may be an electric switch, simultaneously activating electric motors operable to adjust the suspension and the tilt resistance, respectively.

The control knob 22 may preferably include an indicator that informs the seated driver whether the firmness of the suspension and the tilt resistance is adequate for his weight. The indicator may comprise a mechanical weight indicator connected to the suspension, and using visual indications, such as a red color for a non-optimal adjustment and green color for an optimal adjustment. Thus, the seated driver may conveniently just sit down on the seat arrangement, and adjust the firmness of the suspension and the tilt resistance of the backrest by rotation of the control knob until the indicator indicates that the firmness and tilt resistances match his weight.

In operation, as the driver is seated in normal upright position for driving and is in the process of lifting a load, he may tilt the backrest rearwards by shifting his weight and pressing his back against the backrest. As the driver leans back, the gas spring will generate a tilt resistance, due to compression of the gas spring 17, to prevent unintentional tilting of the backrest. As the tilt resistance is overcome it results in a horizontal sliding movement of the seat section 3 relative the seat carriage 6 and a corresponding tilting movement of the backrest 4. The backrest will thus move to a rearwardly tilted position, thereby providing a more ergonomically favorable position for handling loads at high heights.

Specific embodiments of the invention have now been described. However, instead of using coil springs, other resilient elements may be used, such as a stretchable band made of an elastic material such as rubber. Further, the adjustment means for adjusting the firmness and tension of the resilient elements may be arranged in other ways than the above-described arrangement with an anchor and a threaded shaft. For example, the connection element holding the resilient elements may be displaced by means of an eccentric element, such as a cam dish, linear motors, a gear arrangement, or the like.

## Claims

1. A seat assembly (2) for an industrial vehicle (1) comprising:
a seat section (3) for supporting a seated driver's buttocks;
a backrest (4) tiltable between at least two positions; and
a tilt resistance adjustment (18-21) for adjusting a tilt resistance of the backrest;
**characterized in that** the backrest (4) is pivotally mounted to a rearward area of the seat section (3), that the backrest is arranged to tilt about a rotation axis which is displaced from a pivotal mount between the seat section and the backrest, and that the seat section (3) is arranged to move forward as the backrest (4) is tilted rearwardly.

2. A seat assembly according to claim 1, wherein said seat section (3) is suspended to allow a vertical movement of said seat section, said seat assembly further comprising:
a suspension adjustment for adjusting a firmness of a suspension (7); and
a control means (22) operable by the driver to simultaneously adjust the suspension adjustment and the tilt resistance adjustment.

3. A seat assembly according to any one of the preceding claims, wherein said tilt resistance comprises a first set of springs (17) arranged to generate the tilt resistance.

4. A seat assembly according to claim 3, wherein said first set of springs (17) comprises at least one gas spring.

5. A seat assembly according to claim 3 or 4, in combination with claim 2, wherein said tilt resistance further comprises a second set of springs arranged to exert a force that reduces the tilt resistance generated by the first set of springs (17), wherein the magnitude of the force exerted by the second set of springs is adjustable by said control means, thereby providing the tilt resistance adjustment for adjusting said tilt resistance of the backrest (4).

6. A seat assembly according to claim 5, wherein said second set of springs comprises at least one coil spring (18, 19).

7. A seat assembly according to claim 6, wherein said tilt resistance adjustment further comprises an anchor (20) provided with threads and connected to said at least one coil spring (18, 19), and a threaded member (21) rotatably interconnected with the threads of said anchor, and arranged in such a way that axial rotation of said threaded member in a first direction stretches the at least one coil spring in said second set of springs thereby increasing the magnitude of the force exerted by the second set of springs and axial rotation of said threaded member in a second opposite direction relaxes the at least one coil spring in said second set of springs thereby decreasing the magnitude of the force exerted by the second set of springs, wherein rotation of said threaded member is controlled by said control means.

8. A seat assembly according to claim 7, wherein said second set of springs comprises a first and a second coil spring (18, 19) arranged symmetrically about said threaded member.

9. A seat assembly according to any one of the preceding claims as dependent on claim 2, wherein the control means further comprises an indicator for indicating when the firmness of the suspension and the tilt resistance is appropriate for the driver's weight.

10. An industrial vehicle, and preferably an industrial truck, comprising a seat assembly according to any one of the preceding claims.

## Patentansprüche

1. Sitzanordnung (2) für ein Industriefahrzeug (1) umfassend:
einen Sitzabschnitt (3) zur Unterstützung des Gesäßes eines sitzenden Fahrers ;
eine zwischen wenigstens zwei Positionen kippbare Rückenlehne (4); und
eine Kippwiderstandsjustierung (18-21) zur Justierung eines Kippwiderstands der Rückenlehne;
**dadurch gekennzeichnet, dass** die Rückenlehne (4) an einem rückwärtigen Bereich des Sitzabschnitts (3) schwenkbar angeordnet ist, und dass die Rückenlehne um eine Rotationsachse kippbar ausgebildet ist, welche von einer Schwenkanordnung zwischen dem Sitzabschnitt und der Rückenlehne verschiebbar ist, und dass der Sitzabschnitt (3) ausgelegt ist, sich nach vorne zu bewegen, wenn die Rückenlehne (4) nach hinten gekippt wird.

2. Sitzanordnung nach Anspruch 1, wobei der Sitzabschnitt (3) so aufgehängt ist, dass eine vertikale Bewegung des Sitzabschnitts möglich ist, wobei die Sitzanordnung weiter umfasst:
eine Aufhängungsjustierung zur Justierung einer Aufhängungshärte (7) und
eine Steuereinrichtung (22), die vom Fahrer bedienbar ist, um gleichzeitig die Aufhängungsjustierung und die Kippwiderstandsjustierung einzustellen.

3. Sitzanordnung nach einem der vorhergehenden Ansprüche, wobei der Kippwiderstand einen ersten Satz Federn (17) umfasst, der zur Erzeugung des Kippwiderstands ausgebildet ist.

4. Sitzanordnung nach Anspruch 3, wobei der erste Satz Federn (17) wenigstens eine Gasfeder umfasst.

5. Sitzanordnung nach Anspruch 3 oder 4, in Kombination mit Anspruch 2, wobei der Kippwiderstand weiter einen zweiten Satz Federn umfasst, der zur Ausübung einer Kraft ausgebildet ist, die den Kippwiderstand, der von dem ersten Satz Federn (17) erzeugt wird, verringert, wobei die Größe der Kraft, die von dem zweiten Satz Federn ausgeübt wird, durch die Steuereinrichtung justierbar ist, wodurch die Kippwiderstandsjustierung zur Justierung des Kippwiderstands der Rückenlehne (4) bereitgestellt wird.

6. Sitzanordnung nach Anspruch 5, wobei der zweite Satz Federn wenigstens eine Spiralfeder (18,19) umfasst.

7. Sitzanordnung nach Anspruch 6, wobei die Kippwiderstandsjustierung weiter einen Anker (20), der mit Gewindegängen ausgestattet ist und mit der wenigstens einen Spiralfeder (18,19) verbunden ist, und ein Gewindeelement (21) umfasst, das drehbar mit dem Gewinde des Ankers verbunden ist, und das in einer Weise angeordnet ist, dass eine Axialrotation des Gewindeelements in eine erste Richtung die wenigstens eine Spiralfeder in dem zweiten Satz Federn auseinander zieht, wodurch die Größe der Kraft, die von dem zweiten Satz Federn ausgeübt wird erhöht wird, und eine Axialrotation des Gewindeelements in eine zweite entgegengesetzte Richtung die wenigstens eine Spiralfeder in dem zweiten Satz Federn entspannt, wodurch die Größe der Kraft, die von dem zweiten Satz Federn ausgeübt wird, verringert wird, wobei die Rotation des Gewindeelements durch die Steuereinrichtung gesteuert wird.

8. Sitzanordnung nach Anspruch 7, wobei der zweite Satz Federn eine erste und eine zweite Spiralfeder (18,19) umfasst, die symmetrisch um das Gewindeelement herum angeordnet sind.

9. Sitzanordnung nach einem der vorhergehenden Ansprüche, soweit abhängig von Anspruch 2, wobei die Steuereinrichtung weiter einen Indikator zum Anzeigen umfasst, wann die Aufhängungshärte und der Kippwiderstand dem Gewicht des Fahrers entsprechen.

10. Industriefahrzeug, und vorzugsweise ein Flurförderfahrzeug, umfassend eine Sitzanordnung nach einem der vorhergehenden Ansprüche.

## Revendications

1. Ensemble de siège (2) pour véhicule de manutention (1) comprenant :
une section d'assise (3) destinée à supporter le séant d'un conducteur assis ;
un dossier (4) inclinable entre au moins deux positions ; et
un dispositif de réglage de la résistance à l'inclinaison (18-21) permettant de régler la résistance à l'inclinaison du dossier ;
**caractérisé en ce que** le dossier (4) est monté pivotant sur une zone arrière de la section d'assise (3), **en ce que** le dossier est conçu pour s'incliner par rapport à un axe de rotation qui est déplacé à partir d'une monture pivotante entre la section d'assise et le dossier, et **en ce que** la section d'assise (3) est conçue pour s'avancer tandis que le dossier (4) subit une inclinaison vers l'arrière.

2. Ensemble de siège selon la revendication 1, dans lequel ladite section d'assise (3) est suspendue pour permettre un mouvement vertical de ladite section d'assise, ledit ensemble de siège comprenant en outre :
un dispositif de réglage de la suspension permettant de régler la fermeté d'une suspension (7) ; et
un moyen de commande (22) actionnable par le conducteur pour régler simultanément le dispositif de réglage de la suspension et le dispositif de réglage de la résistance à l'inclinaison.

3. Ensemble de siège selon l'une quelconque des revendications précédentes, dans lequel ladite résistance à l'inclinaison comprend un premier ensemble de ressorts (17) conçu pour générer la résistance à l'inclinaison.

4. Ensemble de siège selon la revendication 3, dans lequel ledit premier ensemble de ressorts (17) comprend au moins un vérin à gaz.

5. Ensemble de siège selon la revendication 3 ou 4, en combinaison avec la revendication 2, dans lequel ladite résistance à l'inclinaison comprend en outre un second ensemble de ressorts conçu pour exercer une force réduisant la résistance à l'inclinaison générée par le premier ensemble de ressorts (17), la grandeur de la force exercée par le second ensemble de ressorts pouvant être réglée à l'aide dudit moyen de commande, en produisant ainsi le dispositif de réglage de la résistance à l'inclinaison qui permet de régler ladite résistance à l'inclinaison du dossier (4).

6. Ensemble de siège selon la revendication 5, dans lequel ledit second ensemble de ressorts comprend au moins un ressort hélicoïdal (18, 19).

7. Ensemble de siège selon la revendication 6, dans lequel ledit dispositif de réglage de la résistance à l'inclinaison comprend en outre un dispositif d'ancrage (20) pourvu de filets et relié audit au moins un ressort hélicoïdal (18, 19), et un élément fileté (21) accouplé en rotation avec les filets dudit dispositif d'ancrage, et conçu de telle manière que la rotation axiale dudit élément fileté dans un premier sens entraîne l'étirement de l'au moins un ressort hélicoïdal dudit second ensemble de ressorts, en augmentant ainsi la grandeur de la force exercée par le second ensemble de ressorts, et de telle manière que la rotation axiale dudit élément fileté dans un second sens opposé relâche l'au moins un ressort hélicoïdal dudit second ensemble de ressorts en réduisant ainsi la grandeur de la force exercée par le second ensemble de ressorts, la rotation dudit élément fileté étant commandée par ledit moyen de commande.

8. Ensemble de siège selon la revendication 7, dans lequel ledit second ensemble de ressorts comprend un premier et un second ressort hélicoïdal (18, 19) agencés symétriquement autour dudit élément fileté.

9. Ensemble de siège selon l'une quelconque des revendications précédentes, dans la mesure où elles dépendent de la revendication 2, dans lequel le moyen de commande comprend en outre un indicateur destiné à indiquer le moment où la fermeté de la suspension et la résistance à l'inclinaison sont appropriées au poids du conducteur.

10. Véhicule de manutention, consistant de préférence en un chariot de manutention, comprenant un ensemble de siège selon l'une quelconque des revendications précédentes.
